# FASCICULE DE BREVET EUROPEEN

(11) **EP 3 031 054 B1**
(45) Date de publication et mention de la délivrance du brevet: **06.09.2017**
(21) Numéro de dépôt: 14748212.9
(22) Date de dépôt: 07.08.2014
(51) Int. Cl.: G21F 9/30, C03B 1/00, F23G 5/32, F23G 7/00, F27B 14/06, G21F 9/32, C03B 5/00, C03B 5/02, F23G 5/08, F23G 5/44, F23G 7/06, F27B 14/00, F27D 99/00, F27B 14/14

(54) **PROCEDE ET INSTALLATION D'INCINERATION, FUSION ET VITRIFICATION DE DECHETS ORGANIQUES ET METALLIQUES**
VERFAHREN UND VORRICHTUNG ZUR VERBRENNUNG, VERSCHMELZUNG UND VERGLASUNG VON ORGANISCHEM UND METLLISCHEM ABFALL
PROCESS AND INSTALLATION FOR INCINERATION, FUSION AND VITRIFICATION OF ORGANIC AND METALLIC WASTES

(30) Priorité: 08.08.2013 FR 1357894
(43) Date de publication de la demande: 15.06.2016
(73) Titulaire: AREVA NC, 92400 Courbevoie (FR)
(72) Inventeur: BOEN, Roger, F-30130 Saint Alexandre (FR); CHARVIN, Patrice, F-38160 Saint Romans (FR); LEMONT, Florent, F-30400 Villeneuve les Avignon (FR); RUSSELLO, Aldo, F-30126 Tavel (FR)
(74) Mandataire: Brevalex
(86) Numéro de dépôt international: PCT/EP2014/067012
(87) Numéro de publication internationale: WO 2015/018905

(56) Documents cités:
- WO-A2-97/49641
- WO-A2-03/067166
- FR-A1- 2 541 428
- FR-A1- 2 888 576

## Description

### Domaine de l'invention

La présente invention se situe dans le domaine du traitement des déchets mixtes et dangereux dans le but de les conditionner et les entreposer pendant de longues durées dans des conteneurs appropriés.

On entend par déchets mixtes des mélanges de déchets métalliques et organiques et susceptibles de contenir également des matières minérales et/ou autres.

On entend par déchets dangereux des déchets contaminés radiologiquement et/ou toxiques.

L'invention concerne donc plus précisément le traitement par incinération, fusion et vitrification de déchets mixtes et dangereux, ainsi que les fours de fusion à induction et les réacteurs de combustion/incinération, notamment à plasma.

### Art antérieur et problème posé

Dans le cadre de l'exploitation et/ou du démantèlement des installations nucléaires, ou d'autres installations contenant des éléments toxiques ou contaminés, il s'avère indispensable de traiter les déchets qui en sont issus, qu'ils soient constitués de déchets métalliques, par exemple en acier inoxydable, en cuivre et/ou en aluminium, et/ou de déchets organiques, comme par exemple le polychlorure de vinyle (PVC) et le polytéréphtalate d'éthylène (PET), voire de déchets minéraux, tels que la fibre de verre. Tous ces matériaux peuvent être contaminés par des éléments radioactifs, et en particulier des matières fissiles. Généralement, ces déchets sont placés dans des sacs en PVC. Toutefois, ces déchets doivent être traités, conditionnés pour minimiser leur volume et sous une forme qui permette leur entreposage et stockage pendant de longues durées, en fonction de leur radioactivité.

Il existe déjà des procédés adaptés au traitement de mélanges de déchets minéraux (par exemple la fibre de verre) et de déchets organiques (PVC, PET), ces déchets étant alimentés sous une forme broyée à une granulométrie centimétrique. Le document WO97/49641 A2 enseigne une installation pour un procédé d'incinération des déchets organiques et métalliques contaminées, par une incinération en milieu plasma d'oxygène dans un réacteur à paroi froide.

La demande de brevet français FR 2 838 117 en est un exemple. L'installation, qui y est décrite, est constituée d'un réacteur à paroi froide de combustion en milieu plasma d'oxygène, placé au-dessus d'un four de fusion de verre par induction à paroi froide et comportant un système de coulée séquentielle de la matrice vitreuse. Toutefois, une telle installation ne peut pas traiter de déchets métalliques, ni prendre en charge des sacs de déchets entiers. De plus, la gestion de la criticité dans la partie four de fusion est difficile en raison du risque d'accumulation de plutonium dans le verre qui reste dans le fond du four après chaque coulée ou dans la zone de combustion dans laquelle sont situées les torches à plasma.

Un autre procédé utilise un réacteur à paroi chaude, c'est-à-dire réfractaire, de combustion en milieu plasma, placé au-dessus d'un four tournant autour d'un axe vertical pour fondre le verre et le métal par plasma, la paroi étant chaude, c'est-à-dire réfractaire. Il comporte un système de coulée séquentielle du verre et du métal et peut traiter des sacs entiers de mélanges organiques, de minéraux et de métaux. Par contre, ses dimensions importantes et sa maintenance complexe, en raison de l'usure des matériaux réfractaires, le rendent peu attractif pour une mise en oeuvre en milieu radioactif et pourrait en outre comporter des problèmes de gestion de la criticité.

Le but de l'invention est de remédier à ces différents inconvénients de ces installations de l'art antérieur et de proposer un procédé qui réponde aux objectifs suivants :
- oxyder la fraction organique en eau, en dioxyde de carbone, ou en chlorure d'hydrogène et décontaminer les gaz avant leur neutralisation ;
- dissoudre des cendres provenant de l'oxydation de la fraction organique de ces déchets dans une matrice vitreuse, telle que du verre homogène, ou vitrocristallin ;
- dissoudre la fraction minérale dans la matrice vitreuse ;
- fondre la fraction métallique ;
- dissoudre les radioéléments dans leur phase vitreuse pour les plus oxydables, ou dans la phase métallique pour les moins oxydables ; et
- prendre en charge des sacs de déchets entiers, sans les ouvrir, ni les broyer, pour éviter toute dissémination de la contamination radioactive.

Dans le cas où ces déchets sont contaminés par du plutonium, le procédé de traitement doit également permettre de gérer la criticité, tant dans l'installation où le procédé de traitement est mis en oeuvre que dans le produit final issu de ce traitement.

Le procédé doit être exploitable en milieu radioactif.

Enfin, le procédé de traitement doit conduire à un colis de déchets final, pouvant comporter au moins deux phases, une phase vitreuse et une phase métallique.

### Exposé de l'invention

Un premier objet principal de l'invention est un procédé d'incinération, de fusion et de vitrification de déchets mixtes dangereux, à savoir des mélanges de déchets métalliques et organiques, contaminés radiologiquement et/ou toxiques, et susceptibles de contenir également des matières minérales et/ou autres,.

Selon l'invention, le procédé comprend les étapes successives suivantes :
- introduction dans un réacteur à paroi métallique froide ou tiède d'incinération en milieu plasma d'oxygène, au moyen d'un panier en fibre de verre, des déchets placés dans un sac ;
- incinération des déchets dans le réacteur ;
- fusion des fractions résiduelles issues de l'incinération des déchets et du panier dans un four à induction avec fusion dans un conteneur formant creuset, dénommé « In Can Melter », placé en dessous du réacteur;
- vitrification des fractions résiduelles fondues dans une matrice vitreuse contenue dans le creuset;
- répétition de ce cycle pour chaque panier de déchets ;
- démontage du four et désassemblage du conteneur formant creuset, en fin de processus.

A noter que l'on entend par paroi froide ou tiède une paroi à une température inférieure à 150°C.

Avantageusement, ce procédé comprend en outre un traitement des gaz résiduels de l'incinération, issus de ce procédé, et comportant les phases suivantes :
- postcombustion des gaz issus de l'incinération des déchets ;
- phosphatation éventuelle des chlorures métalliques formés lors de l'incinération lorsque les déchets, notamment les organiques, comprennent du chlore;
- filtration des poussières ;
- recyclage des poussières dans le four;
- neutralisation des gaz décontaminés.

Une fois les différents cycles de traitement des déchets terminés, le procédé comprend, de plus, les phases suivantes :
- arrêt des torches à plasma du réacteur et du four;
- refroidissement de l'ensemble de l'installation ;
- démontage du four par rapport au réacteur.
- inspection du réacteur.

Un deuxième objet principal de l'invention est une installation d'incinération, de fusion et de vitrification des déchets utilisant le procédé ci-dessus.

Selon l'invention, cette installation comprend :
- un four à induction du type fusion dans un conteneur formant creuset (In Can Melter); et
- un réacteur à paroi métallique froide ou tiède comprenant au moins une torche à plasma et un sas d'introduction de paniers de déchets, ce réacteur étant placé sur le four de façon démontable.

Selon l'invention, l'installation se complète avantageusement d'une chaîne de traitement des gaz comprenant :
- une chambre de postcombustion ;
- un refroidisseur;
- au moins un filtre ; et
- un système de neutralisation du chlorure d'hydrogène.

### Description détaillée d'une réalisation de l'invention

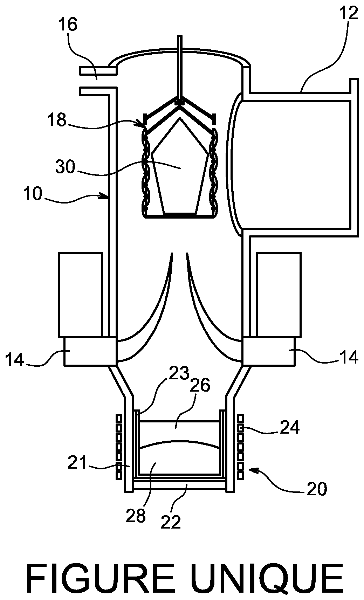

La Figure unique montre une installation selon l'invention pour la mise en oeuvre du procédé selon l'invention, dans le but d'incinérer, de fondre et de vitrifier des déchets mixtes.

Il est précisé ci-après que la présente description utilise différemment les termes incinération et combustion pour désigner le même traitement.

Un premier élément principal de l'installation est un réacteur 10 de combustion à paroi métallique froide ou tiède. L'intérieur du réacteur contient de l'oxygène, qui est chauffé par une ou plusieurs torches à plasma 14. Ces dernières peuvent être des torches à plasma d'arc ou d'induction.

Un panier 18 est placé à l'intérieur du réacteur 10 et contient un sac de déchets 30. Cet ensemble est suspendu à l'intérieur du réacteur 10. Pour ce faire, le réacteur 10 se complète d'un sas 12 pour l'introduction de chaque panier 18 à l'intérieur du réacteur 10. De préférence, le panier 18 est en fibre de verre ; un tel panier permet d'incinérer des déchets durant une durée supérieure à quinze minutes dans un réacteur ou un incinérateur, sans que les déchets ne soient fondus au préalable, notamment lors de leur insertion dans le réacteur 10. Comme le procédé selon l'invention prévoit de traiter des éléments métalliques, ce panier 18 peut comporter une légère structure métallique. Ce panier 18 est suspendu dans la partie supérieure du réacteur 10, au-dessus des flammes produites par les torches à plasma 14. Enfin, une sortie des gaz 16 est prévue dans la partie supérieure du réacteur 10 ; selon une autre variante, cette sortie des gaz 16 peut aussi être positionnée dans la partie inférieure du réacteur 10 pour faire passer les gaz dans la zone chauffée par le plasma et favoriser leur oxydation.

Un autre élément essentiel de cette installation est un four 20 à induction, de type « In Can Melter ». Un tel type de four fonctionne par induction et comprend une enveloppe 21, complétée par une sole inférieure 22. Un conteneur formant creuset 23 est placé à l'intérieur de l'ensemble et est amovible. Il peut comprendre lui-même une couche interne résistant à la chaleur et donc à l'agressivité du bain fondu et une couche externe isolante. Enfin, un inducteur 24 est placé autour de l'enveloppe 21. Cette figure montre également à l'intérieur du conteneur formant creuset 23 une masse de verre fondu 26 positionnée au-dessus d'une masse de métal fondu 28 reposant dans la partie inférieure du conteneur formant creuset 23.

Ce four 20 permet de fondre la phase métallique 28 par induction directe, ainsi que la phase vitreuse 26, qui se trouve au-dessus; cette phase vitreuse 26 est également chauffée par le bas par contact avec le métal fondu et par le haut avec l'atmosphère chaude régnant à l'intérieur du réacteur 10 et éventuellement avec le rayonnement des torches à plasma placées au-dessus.

L'installation se complète avantageusement d'un ensemble de traitement des gaz issus du réacteur 10. Il est prévu d'y assurer la postcombustion de ces gaz, c'est-à-dire l'oxydation complète de ceux-ci, la phosphatation des chlorures métalliques, formés lors de la combustion des déchets organiques comportant des chlorures, la filtration des poussières entraînées dans ces gaz et leur recyclage dans le four 20 de fusion et la neutralisation des gaz décontaminés. Pour mener à bien ces différentes opérations, on peut utiliser une chambre de postcombustion, un refroidisseur, un filtre du type électrofiltre ou filtre à média filtrant, un autre filtre de très haute efficacité et un système de neutralisation du chlorure d'hydrogène.

Le processus détaillé du procédé selon l'invention est le suivant.

Le processus débute par l'assemblage étanche du réacteur 10 d'incinération des déchets et du four 20 de fusion du métal et du verre.

S'ensuit l'éventuelle connexion étanche de la chaîne de traitement des gaz, branchée à la sortie des gaz 16 du réacteur 10, lorsque cette connexion n'est pas permanente. Ensuite, cette chaîne de traitement des gaz est mise en service. L'inducteur 24 du four 20 de fusion est également mis en service.

Les torches à plasma 14 du réacteur 10 sont ensuite allumées pour préchauffer l'intérieur du réacteur 10, c'est-à-dire l'atmosphère gazeuse chargée en oxygène.

On procède ensuite à l'ouverture du sas 12, pour introduire un sac de déchets 30 dans un premier panier 18. Ainsi, celui-ci est placé à l'intérieur du réacteur 10, suspendu au-dessus des flammes des torches à plasma 14.

On procède alors à la fermeture du sas 12 d'introduction des déchets.

La combustion progressive des déchets présents dans le sac de déchets 30 peut alors avoir lieu. Les gaz issus de cette combustion peuvent être traités, ainsi que les poussières récupérées, grâce à la filtration dans la chaîne de traitement des gaz. La puissance des torches à plasma 14 peut être modulée pour contrôler la température de sortie des gaz de combustion.

En fin de combustion des déchets présents dans le sac de déchets 30, le panier 18 est descendu dans le four 20.

La fusion des fractions résiduelles issues de l'incinération des déchets, c'est-à-dire des métaux et des résidus de matières organiques, ainsi que celle des cendres et des minéraux, tels que la fibre de verre, entre autre, issus du panier 18, a donc lieu à l'intérieur du four 20. Se forment alors deux phases : une phase métallique 28 lourde et une phase de verre 26 plus légère et qui se positionne au-dessus de la phase métallique 28.

Si d'autres déchets sont à traiter, ce cycle est alors repris, avec l'ouverture du sas 12 et les étapes suivantes, jusqu'à la fin de la fusion du métal et du verre pour tous les déchets, jusqu'à obtenir une composition finale souhaitée du métal et du verre, ceci jusqu'au remplissage complet du volume intérieur du conteneur formant creuset 23 du four 20.

On note que le dernier sac de déchets 30 peut contenir aussi les poussières de filtration récupérées dans la chaîne de traitement des gaz lors de l'incinération des sacs précédents.

Lorsqu'il n'y a plus de déchets à traiter, on procède aux opérations suivantes :
- arrêt des torches à plasma 14 ;
- arrêt du fonctionnement de l'inducteur 24 du four 20 ;
- refroidissement de l'intérieur du conteneur formant creuset 23 et du réacteur 10 ;
- séparation du four 20 de fusion du métal et du verre par rapport au réacteur 10 d'incinération des déchets et désassemblage du conteneur formant creuset 23.

Une éventuelle inspection du réacteur 10 peut alors avoir lieu.

Dans un exemple de réalisation, on envisage des séquences de fonctionnement d'une telle installation pour une vingtaine de sacs d'environ 28 kg, contenant chacun 10 kg de déchets organiques, 15 kg de déchets métalliques et 3 kg constitués par le panier 18, composé de métal et de fibre de verre.

Du point de vue du dimensionnement, la chambre de combustion du réacteur 10 est cylindrique et d'un diamètre d'environ 1 m, d'une hauteur égale à environ 2 m, sa surface d'échange avec les gaz étant d'environ 7 m² et son volume d'environ 1,60 m³.

Les torches à plasma 14, qui sont utilisées, peuvent être chacune d'une puissance de 75 KW. Le conteneur formant creuset 23, qui constitue le conteneur final dans lequel seront conditionnés, entreposés et stockés les déchets, est cylindrique d'un diamètre d'environ 500 mm et d'une hauteur utile d'environ 500 mm.

Dans ce cas, la capacité d'incinération est environ de 20 kg par heure d'un déchet organique dont le pouvoir de combustion interne moyen est de l'ordre de 33 MJ/kg. Ceci conduit à une durée de combustion de chaque sac de l'ordre de 30 minutes. Le débit d'oxygène nécessaire pendant cette période de combustion est supérieure à 60 kg/h pour pouvoir être en surstoechiométrie. Le volume d'une telle chambre permet un temps de séjour moyen pour les gaz dans le réacteur 10 de plus d'une dizaine de secondes. La surstoechiométrie en oxygène, associée à un temps de séjour moyen pour les gaz dans le réacteur d'une dizaine de secondes, permet une oxydation complète des déchets organiques.

La puissance fournie pour la combustion des déchets est alors environ de 183 kW et est complétée par la puissance fournie par les torches à plasma 14, pouvant atteindre 150 KW. Cette puissance est modulable pour réguler la température des gaz en sortie des gaz du réacteur 10. Une petite partie de la puissance fournie par la combustion des déchets et par les torches à plasma 14 est utilisée pour élever la température des gaz brûlés, jusqu'à la température de fonctionnement du réacteur 10, c'est-à-dire entre 800 et 1 000°C. Toutefois, la majorité de cette puissance est transférée par un échange thermique vers les parois froides du réacteur 10.

Après la fin de la combustion des déchets, le panier 18 contenant les cendres, provenant de cette combustion, est descendu dans le bain de métal et de verre du four 20, de façon à permettre la fusion des métaux et des minéraux. Le métal y est maintenu en fusion par le chauffage par induction directe, grâce à l'inducteur 24. On précise que, dès la descente d'un panier 18 de rang n dans le four 20, un nouveau panier de rang n + 1 est introduit dans le réacteur 10 par le sas 12, cette opération durant de l'ordre de moins de 15 minutes.

Enfin, à titre d'exemple, après le traitement de l'ordre d'une vingtaine de sacs de déchets, et en fonction de la composition des déchets, le four 20 peut contenir une masse de 375 kg de métal et de 180 kg de verre formé à partir de la fibre de verre des paniers 20, des cendres, des poussières provenant de la combustion et des additifs minéraux destinés à ajuster sa composition chimique.

### Avantages de l'invention

L'association d'un réacteur, de type à combustion à paroi métallique refroidie, et d'une combustion à l'oxygène pur permet de minimiser les débits de gaz de combustion à traiter, ceci par rapport à la combustion à l'air, qui comporte 80 % d'azote inutile pour cette combustion. Ceci permet de maintenir une température des gaz de température raisonnable, c'est-à-dire inférieure à 1200°C, pour éviter, par exemple, la fusion prématurée du panier 18 en fibre de verre, qui porte les déchets. En effet, les calories supplémentaires sont absorbées par la paroi froide du réacteur 10. Cette association permet de minimiser les dimensions globales du réacteur 10 d'incinération et de traitement des gaz. L'association du système d'alimentation par un sas 12, pour l'introduction des déchets contenus dans un panier 18 en fibre de verre, et du réacteur 10 de combustion à paroi métallique froide en milieu plasma d'oxygène, permet de minimiser les dimensions de ce réacteur 10 et de l'ensemble de traitement des gaz, avec un débit de combustion stable, tout en gardant l'avantage de traiter des sacs de déchets entiers, sans les ouvrir, ni les broyer, pour éviter ainsi toute dissémination de la contamination radioactive.

Un tel réacteur 10, qui est ainsi refroidi, n'est pas corrodé par les gaz de combustion, ce qui conduit à allonger sa durée de vie.

Entre deux séquences d'utilisation de l'installation, selon l'invention, il est également possible et facile d'inspecter et de nettoyer le réacteur 10.

L'utilisation d'un four 20 de fusion de métal et de verre, de type In Can Melter, conduit, de par son fonctionnement séquentiel, à des arrêts réguliers de l'installation, avec changement du conteneur formant creuset du four de fusion. Ceci facilite la gestion de la criticité, puisqu'il ne peut pas y avoir d'accumulation de matière fissile dans le conteneur formant creuset 23 du four 20 de fusion.

L'association du four 20, de type In Can Melter, et du réacteur 10 de combustion à paroi métallique froide ou tiède est particulièrement pertinente, puisque le réacteur 10 peut refroidir très rapidement. Ceci permet de déconnecter à froid le four 20 par rapport au réacteur 10, de manière à changer le conteneur formant creuset 23, sans perdre de temps.

## Revendications

1. Procédé d'incinération, de fusion et de vitrification de déchets mixtes (30) comportant des déchets métalliques et organiques et susceptibles de contenir des matières minérales, d'une part et contaminés radiologiquement et/ou toxiques, d'autre part,
**caractérisé en ce qu'**il comprend les étapes suivantes :
- introduction dans un réacteur (10) à paroi métallique froide ou tiède et d'incinération en milieu plasma d'oxygène, au moyen d'un panier (18) en fibre de verre, par l'intermédiaire d'un sas (12) débouchant dans le réacteur (10), de déchets (30) placés dans un sac, ledit sac étant placé dans le panier (18) ;
- incinération des déchets (30) dans le réacteur (10) ;
- fusion des fractions résiduelles issues de l'incinération des déchets (30) et du panier (18), dans un four (20) à induction, du type avec fusion dans un conteneur formant creuset (23), ce four (20) étant placé en dessous du réacteur (10) ;
- vitrification des fractions résiduelles fondues en matrice vitreuse ;
- répétition de ce cycle pour chaque panier (18) ;
- démontage du four (20) et désassemblage du conteneur formant creuset (23).

2. Procédé selon la revendication 1, **caractérisé en ce qu'**il consiste à faire traitement des gaz résiduels de l'incinération, comprenant les phases suivantes :
- postcombustion des gaz issus de l'incinération ;
- phosphatation des chlorures métalliques, formés lors de l'incinération ;
- filtration des poussières ;
- recyclage des poussières dans le four (20) ;
- neutralisation des gaz décontaminés.

3. Procédé selon la revendication 1, **caractérisé en ce qu'**avant la phase de démontage du four (20), le procédé comprend en outre :
- l'arrêt des torches à plasma du réacteur (10) et du four ; et
- le refroidissement de l'ensemble de l'installation.

4. Procédé selon la revendication 1, **caractérisé en ce qu'**après la phase de démontage du four (20), le procédé comprend en outre :
- l'inspection du réacteur (10).

5. Installation pour la mise en oeuvre du procédé d'incinération, de fusion et de vitrification de déchets selon l'une des revendications précédentes, **caractérisée en ce qu'**elle comprend principalement :
- un réacteur (10) à paroi métallique froide ou tiède, comprenant au moins une torche à plasma (14) et un sas d'introduction (12) pour l'introduction de paniers (18) comprenant les déchets (30),
- un four (20) de fusion à induction, de type avec fusion dans un conteneur formant creuset (23), le four de fusion (20) étant positionné sous le réacteur (10), le four étant démontable.

6. Installation selon la revendication 5, **caractérisée en ce qu'**elle comprend une chaîne de traitement des gaz, constituée de :
- une chambre de postcombustion ;
- un refroidisseur;
- au moins un filtre ; et
- un système de neutralisation du chlorure d'hydrogène.

## Patentansprüche

1. Verfahren zur Verbrennung, zur Verschmelzung und zur Verglasung von gemischten Abfällen (30), die metallische und organische Abfälle umfassen und dazu ausgelegt sind, einerseits mineralische Materialien und andererseits radiologisch und/oder toxisch kontaminierte Materialien zu enthalten,
**dadurch gekennzeichnet, dass** es die folgenden Schritte umfasst:
- Einführen von Abfällen (30), die in einem Sack platziert sind, in einen Reaktor (10) mit kalter oder lauwarmer metallischer Wand zur Verbrennung in einer Sauerstoffplasmaumgebung mit Hilfe eines Korbs (18) aus Glasfaser mittels einer Schleuse (12), die in den Reaktor (10) mündet, wobei der Sack in dem Korb (18) platziert wird;
- Verbrennen der Abfälle (30) in dem Reaktor (10);
- Verschmelzen der Restfraktionen aus der Verbrennung der Abfälle (30) und des Korbs (18) in einem Induktionsofen (20) vom Typ mit Verschmelzung in einem Behälter, der einen Tiegel (23) bildet, wobei dieser Ofen (20) unter dem Reaktor (10) platziert ist;
- Verglasen der geschmolzenen Restfraktionen in einer Glasmatrix;
- Wiederholen dieses Zyklus für jeden Korb (18);
- Demontage von dem Ofen (20) und Zerlegung des Behälters, der den Tiegel (23) bildet.

2. Verfahren nach Anspruch 1, **dadurch gekennzeichnet, dass** es eine Behandlung der Restgase aus der Verbrennung umfasst, umfassend die folgenden Schritte:
- Nachverbrennung der aus der Verbrennung stammenden Gase;
- Phosphatierung der während der Verbrennung gebildeten metallischen Chloride;
- Filtration der Stäube;
- Recycling der Stäube in dem Ofen (20);
- Neutralisierung der dekontaminierten Gase.

3. Verfahren nach Anspruch 1, **dadurch gekennzeichnet, dass** das Verfahren vor dem Schritt der Demontage von dem Ofen (20) ferner umfasst:
- Anhalten der Plasmabrenner des Reaktors (10) und des Ofens; und
- Abkühlen der gesamten Anlage.

4. Verfahren nach Anspruch 1, **dadurch gekennzeichnet, dass** das Verfahren nach dem Schritt der Demontage von dem Ofen (20) ferner umfasst:
- Inspizieren des Reaktors (10).

5. Anlage zur Durchführung des Verfahrens zur Verbrennung, zur Verschmelzung und zur Verglasung von Abfällen nach einem der vorhergehenden Ansprüche, **dadurch gekennzeichnet, dass** sie im Wesentlichen umfasst:
- einen Reaktor (10) mit kalter oder lauwarmer metallischer Wand, umfassend wenigstens einen Plasmabrenner (14) und eine Einbringschleuse (12) zum Einbringen von Körben (18), die die Abfälle (30) umfassen,
- einen Induktionsschmelzofen (20) vom Typ mit Verschmelzung in einem Behälter, der einen Tiegel (23) bildet, wobei der Schmelzofen (20) unter dem Reaktor (10) positioniert ist, wobei der Ofen demontierbar ist.

6. Anlage nach Anspruch 5, **dadurch gekennzeichnet, dass** sie eine Gasbehandlungskette umfasst, gebildet durch:
- eine Nachverbrennungskammer;
- einen Kühler;
- wenigstens einen Filter; und
- ein System zur Neutralisierung von Wasserstoffchlorid.

## Claims

1. A method for incinerating, melting and vitrifying mixed waste (30) including metal and organic waste and likely to contain mineral materials, on the one hand, and radiologically contaminated and/or toxic waste, on the other hand,
**characterised in that** it comprises the following steps of:
- introducing in an oxygen plasma medium incinerating reactor with a cold or warm metal wall (10), by means of a basket (18) of glass fibre, through an air lock (12) opening into the reactor (10), waste (30) placed in a bag, said bag being placed in the basket (18);
- incinerating waste (30) in the reactor (10);
- melting residual fractions derived from the incineration of waste (30) and the basket (18), in an induction furnace (20), of the type with melting in a crucible-forming container (23), this furnace (20) being placed below the reactor (10);
- vitrifying molten residual fractions into a glass matrix;
- repeating this cycle for each basket (18);
- dismantling the furnace (20) and disassembling the crucible-forming container (23).

2. The method according to claim 1, **characterised in that** it consists in treating the residual gases from incineration, comprising the following phases of:
- post-combusting gases from the incineration;
- phosphatizing metal chlorides formed during the incineration;
- filtering dust;
- recycling the dust in the furnace (20);
- neutralizing the decontaminated gases.

3. The method according to claim 1, **characterised in that** before the phase of dismantling the furnace (20), the method further comprises:
- shutting down the plasma torches of the reactor (10) and of furnace; and
- cooling the entire facility.

4. The method according to claim 1, **characterised in that** after the phase of dismantling the furnace (20), the method further comprises:
- inspecting the reactor (10).

5. A facility for implementing the method for incinerating, melting and vitrifying waste according to claim 1, **characterised in that** it mainly comprises:
- a reactor (10) with a cool or warm metal wall, comprising at least one plasma torch (14) and an introducing air lock (12) for introducing baskets (18) comprising waste (30),
- an induction melting furnace (20), of the type with melting in a crucible-forming container (23), the melting furnace (20) being positioned below the reactor (10), the furnace being dismountable.

6. The facility according to claim 5, **characterised in that** it comprises a gas treatment train, consisting of:
- a post-combustion chamber;
- a cooler;
- at least one filter; and
- a hydrogen chloride neutralizing system.
